(19) Europäisches Patentamt
European Patent Office
Office européen des brevets

(11) **EP 4 112 159 A1**

(12) **EUROPEAN PATENT APPLICATION**

(43) Date of publication:
**04.01.2023 Bulletin 2023/01**

(21) Application number: **22181925.3**

(22) Date of filing: **29.06.2022**

(51) International Patent Classification (IPC):
***B01F 25/434*** (2022.01)    ***B01F 25/433*** (2022.01)
***B01F 35/00*** (2022.01)

(52) Cooperative Patent Classification (CPC):
**B01F 25/4342; B01F 25/4335; B01F 35/561**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **01.07.2021 JP 2021109913
26.10.2021 JP 2021175085**

(71) Applicant: **Sio Co., Ltd.
Hachioji-shi, Tokyo 193-0822 (JP)**

(72) Inventors:
• **Komazawa, Masuhiko
Tokyo, 192-0152 (JP)**
• **Ohki, Masaru
Tokyo, 192-0152 (JP)**
• **Komazawa, Shin
Tokyo, 192-0152 (JP)**

(74) Representative: **Gulde & Partner
Patent- und Rechtsanwaltskanzlei mbB
Wallstraße 58/59
10179 Berlin (DE)**

(54) **INTERNAL STRUCTURE, FLUID CHARACTERISTIC CHANGING APPARATUS, AND UTILIZATION APPARATUS THEREOF**

(57) Provided are an internal structure capable of generating fine bubbles without increasing a flow rate, a flow characteristic changing apparatus, and a utilization apparatus thereof. An internal structure which is accommodated in a housing 110 and configured to change characteristics of a fluid with respect to the fluid includes a first internal structure 140 and a second internal structure 240. The first internal structure has a flow characteristic providing portion having a structure of at least one hollow venturi tube. The second internal structure is in the form of a hollow shaft, accommodates at least a portion of the first internal structure inside the hollow shaft, and has a body portion having a plurality of protrusions formed on an outer surface thereof.

Fig. 3

Processed by Luminess, 75001 PARIS (FR)

## Description

CROSS-REFERENCE TO RELATED APPLICATION

This application claims the benefit of Japanese Patent Application No. 2021-109913 filed on July 1, 2021, and Japanese Patent Application No. 2021-175085 filed on October 26, 2021, in the Japanese Patent Office, the entire disclosure of which is incorporated herein by reference for all purposes.

BACKGROUND

1. Field of the Invention

One or more example embodiments relate to a fluid characteristic changing apparatus for changing characteristics of a fluid, an internal structure and a utilization apparatus thereof.

2. Description of the Related Art

According to a related art, there is an apparatus for realizing at least one fluid characteristic change function, such as generating fine bubbles (microbubbles) such as microbubbles (visible air bubbles that are white turbid in the range of 1 micrometer to 100 micrometers) or ultrafine bubbles (colorless, transparent and invisible bubbles of tens of nanometers to 1 micrometer), mixing a plurality of fluids (liquids, liquids and gases, gases), or stirring/spreading or shearing a supply fluid. For example, as such an apparatus, inventions of Japanese Patent No. 6245397 and Japanese Patent No. 6245401 have been proposed by the applicant of the present application. Alternatively, the inventions of WO 2014/204399 and Japanese Patent Application No. 2016-536139 have been proposed by other patent applicants. In addition, a technique for generating fine bubbles by another method has also been developed. For example, there exists a technique for generating fine bubbles by means of a venturi tube, such as the invention of Japanese Patent Publication No. 2013-22575.

[Prior Art Document]

[Patent Document]

(Patent Document 1) Japanese Patent No. 6245397
(Patent Document 2) Japanese Patent No. 6245401
(Patent Document 3) WO 2014/204399
(Patent Document 4) Japanese Patent Publication No. 2016-536139
(Patent Document 5) Japanese Patent Application Publication No. 2013-22575

SUMMARY

Example embodiments provide an internal structure capable of generating fine bubbles without increasing the flow rate and without sucking and injecting gas such as air, a fluid characteristic changing apparatus, and a utilization apparatus thereof, by improving such a prior art. Alternatively, an internal structure capable of simultaneously generating microbubbles and ultrafine bubbles, a fluid characteristic changing apparatus, and a utilization apparatus thereof are provided. In addition, an internal structure suitable for forcibly discharging chips by spraying a fluid (cutting fluid) pressurized by a high-pressure pump by using in the field of machine tools, and a fluid characteristic changing apparatus are provided. In addition, a flow phenomenon in which an impact force (continuous vibration) occurs when pressure is applied to the cavity of the microbubble and is destroyed is called cavitation, and an internal structure capable of supplying a fluid, which may increase a cleaning effect due to this phenomenon, and a fluid characteristic changing apparatus are provided.

According to an aspect, there is provided an internal structure which is accommodated in a housing and configured to change characteristics of a fluid with respect to the fluid including a first internal structure and a second internal structure. The first internal structure has a flow characteristic providing portion having a structure of at least one hollow venturi tube. The second internal structure is in the form of a hollow shaft, accommodates at least a portion of the first internal structure inside the hollow shaft, and has a body portion having a plurality of protrusions formed on an outer surface thereof.

According to another aspect, there is provided a fluid characteristic changing apparatus including the above described internal structure and a housing for accommodating the same. According to another aspect, there is provided a utilization apparatus using the fluid characteristic changing apparatus, wherein a fluid from the fluid characteristic changing apparatus is used as any one of a coolant, a cleaning agent, a sterilizing agent, and a heat transfer agent.

According to another aspect, there is provided an internal structure which is accommodated in a housing and configured to change characteristics of a fluid with respect to the fluid, wherein the internal structure has a shape of a tubular body, and has an inner structure and an outer structure. The inner structure has a flow characteristic providing portion having a structure of at least one hollow venturi tube.

Additional aspects of example embodiments will be set forth in part in the description which follows and, in part, will be apparent from the description, or may be learned by practice of the disclosure.

According to example embodiments, the internal structure of the present invention is capable of generatning fine bubbles such as microbubbles and ultrafine bubbles, mixing a plurality of fluids, or stirring, diffusing or shearing the supplied fluid. In particular, the first internal structure is suitable for generating microbubbles. The second internal structure is suitable for creating ultrafine bubbles. Further, since the first internal structure allows the fluid to flow smoothly compared to the second internal structure, it is possible to generate a large amount of fine bubbles without increasing the flow rate.

Alternatively, as another configuration example, the flow characteristic providing portion having a structure of at least one hollow venturi tube as an inner structure of the internal structure is suitable for generating microbubbles. The body portion in which a plurality of protrusions is formed, which is an outer structure of the internal structure, is suitable for generating ultrafine bubbles. Further, since the inner structure allows the fluid to flow smoothly compared to the outer structure, it is possible to generate a large amount of fine bubbles without increasing the flow rate.

The fluid characteristic changing apparatus of example embodiments may also be applied to a high-pressure coolant supply apparatus which discharges a fluid at a high pressure. In addition, it is also possible to effectively generate fine bubbles such as microbubbles in the fluid to enhance the cleaning effect of the fluid. Alternatively, it is also possible to generate various types of fluids for cooling, cleaning, sterilization, heat transfer, or other functional water containing fine bubbles consisting of microbubbles or ultrafine bubbles to provide to various devices and apparatuses. In addition, as an apparatus for providing tap water containing fine bubbles for household or business faucets, showers, washing machines, etc., the internal structure or the fluid characteristic changing apparatus may be provided.

BRIEF DESCRIPTION OF THE DRAWINGS

These and/or other aspects, features, and advantages of the invention will become apparent and more readily appreciated from the following description of example embodiments, taken in conjunction with the accompanying drawings. These drawings are merely illustrative and do not limit the scope of the present invention.

FIG. 1 is a diagram illustrating an utilization apparatus using a fluid characteristic changing apparatus of example embodiments.
FIG. 2 is a diagram illustrating a three-dimensional external perspective view of a fluid supply pipe according to example embodiment 1 of the fluid characteristic changing apparatus of example embodiments.
FIG. 3 is a diagram illustrating a perspective plan view of the fluid supply pipe of FIG. 2.
FIG. 4 is a diagram illustrating a three-dimensional exploded perspective view of the fluid supply pipe of FIG. 2.
FIG. 5 is a diagram illustrating an exploded cross-sectional view of the fluid supply pipe of FIG. 2.
FIG. 6 is a diagram illustrating a side view (A) and a three-dimensional perspective view (B) of a swirl generating portion on an upstream side of a first internal structure.
FIG. 7 is a diagram illustrating a plan cross-sectional view of a first internal structure.
FIG. 8 is a diagram illustrating a three-dimensional perspective view (A) and a downstream side view (B) of a second internal structure.
FIG. 9 is a diagram illustrating a formation of a plurality of protrusions by the intersection of a plurality of spiral flow paths and a plurality of annular flow paths in a body portion of a second internal structure.
FIG. 10 is a diagram illustrating a perspective plan view of a fluid supply pipe according to example embodiment 2 of the fluid characteristic changing apparatus of example embodiments.
FIG. 11 is a diagram illustrating an exploded cross-sectional view of the fluid supply pipe of FIG. 10.
FIG. 12 is a diagram illustrating a side view (A) and a three-dimensional perspective view (B) of a swirl generating portion on an upstream side of a first internal structure according to example embodiment 2.
FIG. 13 is a diagram illustrating a plan cross-sectional view of the first internal structure according to example embodiment 2.
FIG. 14 is a diagram illustrating an exploded cross-sectional view of a fluid supply pipe according to example embodiment 3 of the fluid characteristic changing apparatus of example embodiments.
FIG. 15 is a diagram illustrating a plan cross-sectional view of a first internal structure according to example embodiment 3.
FIG. 16 is a diagram illustrating a perspective plan view of a fluid supply pipe according to example embodiment 4 of the fluid characteristic changing apparatus of example embodiments.
FIG. 17 is a diagram illustrating a three-dimensional exploded perspective view of the fluid supply pipe of FIG. 16.
FIG. 18 is a diagram illustrating an external view of a second internal structure according to example embodiment 4.
FIG. 19 is a diagram illustrating a perspective plan view of a fluid supply pipe according to example embodiment 5 of the fluid characteristic changing apparatus of example embodiments.
FIG. 20 is a diagram illustrating a three-dimensional exploded perspective view of the fluid supply pipe of FIG. 19.
FIG. 21 is a diagram illustrating an external view of a second internal structure according to example embodiment 5.
FIG. 22 is a diagram illustrating a three-dimensional exploded perspective view of a fluid supply pipe according to example embodiment 6 of the fluid characteristic changing apparatus of example embodiments.

FIG. 23 is a diagram illustrating an exploded cross-sectional view of the fluid supply pipe according to example embodiment 6.

FIG. 24 is a diagram illustrating an exploded cross-sectional view of a modified example of the fluid supply pipe according to example embodiment 6.

FIG. 25 is a diagram illustrating a three-dimensional exploded perspective view of a fluid supply pipe according to example embodiment 7 of the fluid characteristic changing apparatus of example embodiments.

FIG. 26 is a diagram illustrating an exploded cross-sectional view of the fluid supply pipe according to example embodiment 7.

FIG. 27 is a diagram illustrating an external perspective view of a first internal structure according to example embodiment 7.

FIG. 28 is a diagram illustrating a three-dimensional cross-sectional view of the first internal structure according to example embodiment 7.

FIG. 29 is a diagram illustrating a three-dimensional exploded perspective view of a fluid supply pipe according to example embodiment 8 of the fluid characteristic changing apparatus of example embodiments.

FIG. 30 is a diagram illustrating an exploded cross-sectional view of the fluid supply pipe according to example embodiment 8.

DETAILED DESCRIPTION

Hereinafter, a utilization apparatus using a fluid characteristic changing apparatus S of the present invention is shown. Reference numeral 1 denotes a tank (water tank) in which a fluid (e.g., water) is collected. The fluid in the tank 1 is sucked in by a pump 2 and is supplied to the fluid characteristic changing apparatus S through a pipe. In addition to supplying the fluid (first fluid) from the tank 1 to the fluid characteristic changing apparatus S, although not specifically shown, a second fluid is sucked in as needed and the fluid characteristic is changed, then supplied to a target device 4 through a valve 3. When the second fluid is air, the fluid characteristic changing apparatus S only needs to suck in the outside air. For example, when the first fluid from the tank 1 is water and the second fluid is air, while directly generating ultrafine bubbles (mainly vaporized water inside the bubble) in the fluid characteristic changing apparatus S, by stirring/diffusing or shearing the sucked air, a large amount of microbubbles (some of which may become ultrafine bubbles) mainly containing air inside the bubble are generated. Alternatively, it is also possible to generate ultrafine bubbles or microbubbles in the fluid characteristic changing apparatus S only with the first fluid without sucking the second fluid. In other words, the fluid characteristic changing apparatus S of the present invention may boil and vaporize the fluid itself by reducing pressure to generate fine bubbles, or it is also possible to generate fine bubbles by precipitating the gas dissolved at room temperature in the fluid under reduced pressure. In this way, in the fluid characteristic changing apparatus S, the generation of ultrafine bubbles is possible along with the generation of microbubbles, and the utilization apparatus may use a fluid containing microbubbles of various sizes. In addition, the fluid characteristic changing apparatus S may mix, stir/diffuse, or shear two fluids (liquids, liquids and gases, gases, or gas-liquid mixed fluids).

Based on the output of a sensor 5 for detecting the state (water temperature, etc.) of the first fluid in the tank 1 or a sensor 6 for detecting the state (flow rate, pressure, etc.) of the fluid passing through the fluid characteristic changing apparatus S, a control device 7 controls the opening and closing of the valve 3, and shows the control state to an operator on a display panel 8. Then, the fluid passing through the valve 3 is supplied to the target device 4. In the target device 4, except when the supply fluid is consumed, when the fluid is circulated, the fluid used in the target device 4 passes through a filter 9 (in some cases, a chiller) and etc., and filters foreign substances and impurities (in some cases, return the temperature), and then returns to the tank 1.

The fluid from the fluid characteristic changing apparatus S of the present invention is used in various utilization apparatuses. For example, the utilization apparatus is a machine tool, and discharges the fluid from the fluid characteristic changing apparatus S from a nozzle to the blade of work, a grindstone, a drill, etc., to cool or clean the workpiece. Alternatively, the utilization apparatus may be a cleaning system of a production line (especially a precision instrument) of a factory. In this way, the supply fluid from the fluid characteristic changing apparatus S functions as a coolant or a cleaning agent in the target device 4. In other words, the liquid containing fine bubbles lowers the surface tension of the fluid and improves permeability, thereby allowing the fluid to move to minute parts, thereby improving the cooling effect and cleaning ability. When the atmospheric pressure in the liquid becomes less than or equal to the saturated vapor pressure in a cavitation phenomenon to be described later, when the liquid is water, bubbles due to water vapor are generated. This bubble is created by negative pressure, and naturally disappears where the pressure is high, at which time a large impact occurs. This impact is utilized for cleaning to increase the cleaning ability. Similarly, the utilization apparatus may be a cleaning apparatus for bottles, containers, and equipments. Further, ozone is mixed with the water from the tank 1 as a second fluid, and the characteristics are changed with ozone fine bubble water in the fluid characteristic changing apparatus S to discharge the ozone bubble water from the target device 4 to a target product. In this way, deodorization, discoloration, and sterilization effects may be obtained. Ozone is decomposed into oxygen molecules, and in the process, OH radicals and the like are generated, thereby increasing the sterilization performance. Accordingly, the supply fluid from the fluid characteristic changing apparatus S is used, for example, as a sterilizing agent.

Moreover, as a utilization apparatus including the target device 4, there exist fluid systems such as washing, bathing, laundry, cleaning, etc., in a home and a cleaning effect is anticipated. In this case, the tank 1 is unnecessary, and may be realized by directly passing tap water (first fluid) supplied from a water pipe through the fluid characteristic changing apparatus S (the second fluid is air). Likewise, the utilization apparatus may be applied to a fluid system that directly uses tap water in factories, offices, and stores. Alternatively, when oxygen is mixed with water from the tank 1 as a second fluid and the characteristics are changed with oxygen fine bubble water in the fluid characteristic changing apparatus S, the utilization apparatus may be applied to the fluid system for water treatment in agriculture, fishery field or other fields. Liquid containing fine bubbles may be absorbed by living things such as plants and fish to accelerate the growth rate. Liquid containing fine bubbles is also used for cleaning food materials, for example, rice, crops, fish, and the like. In addition, liquid containing fine bubbles is applicable to water treatment systems such as purification of groundwater, wells, and polluted water. Hydrogen, carbon dioxide, and other gases may be mixed with water from the tank 1 as a second fluid, and the characteristics may be changed with hydrogen fine bubble water, carbon dioxide fine bubble water, fine bubble water having other characteristics, or various functional water in the fluid characteristic changing apparatus S, so as to be used for various purposes.

In addition, the utilization apparatus including the target apparatus 4 may be applied to a fluid system which exchanges heat generated by various devices, and it is also feasible to supply the fluid from the fluid characteristic changing apparatus S to such a heat exchanger, and cool or heat. The fluid (including fine bubbles and the effect of temperature change is expected) from the fluid characteristic changing apparatus S is passed through a pipe in the heat exchanger in the target device 4. In the target device 4, the fluid which has passed through the heat exchanger returns to its original temperature in a chiller (not shown), and is circulated and supplied to the tank 1. In this way, the fluid supplied to the target device 4 functions as a heat transfer agent for realizing cooling or heating of the target device.

In case of a fluid system that consumes a specific fluid (not circulated and used), the tank 1 is used while being properly supplied with the fluid. Such a target device may be various manufacturing/production lines, and the fluid from the fluid characteristic changing apparatus S may be used for manufacturing or production of various articles (food, medicine, emulsion fuel, etc.).

In the present invention, the fluid characteristic changing apparatus S includes first and second internal structures or one internal structure having an inner structure and an outer structure for changing the characteristics of a supply fluid, wherein the internal structure also includes a structure thought to cause a change in the structure of connections between molecules in a fluid which is an apparatus that changes the characteristics of a fluid by generating fine bubbles (microbubbles or ultrafine bubbles) in the fluid, or by stirring, spreading, or shearing the fluid. In addition, as a configuration of the fluid characteristic changing apparatus S, it is also possible to arrange a plurality of such internal structures in series or in parallel.

(Example Embodiment 1)

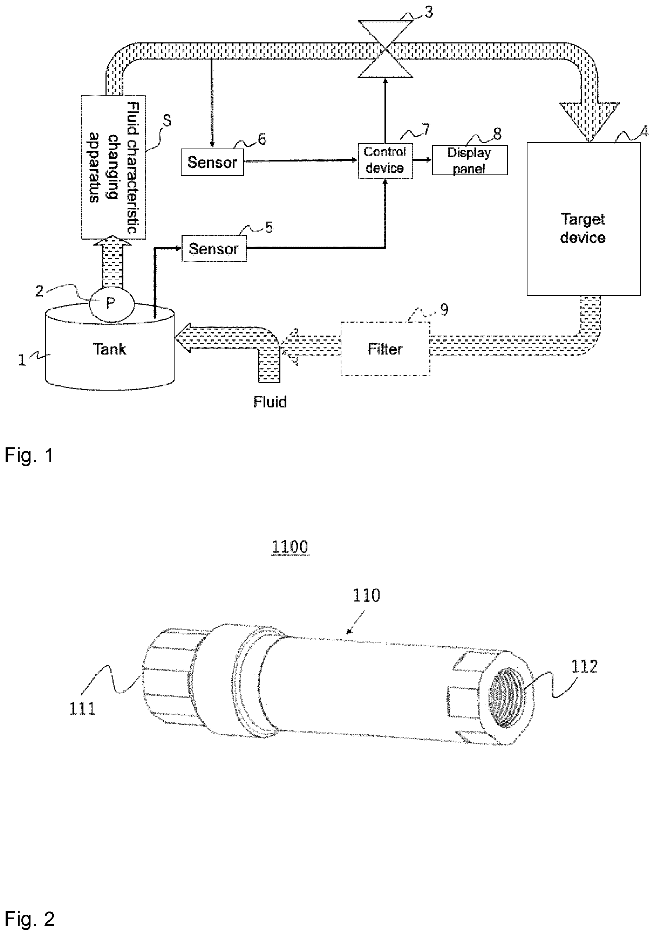

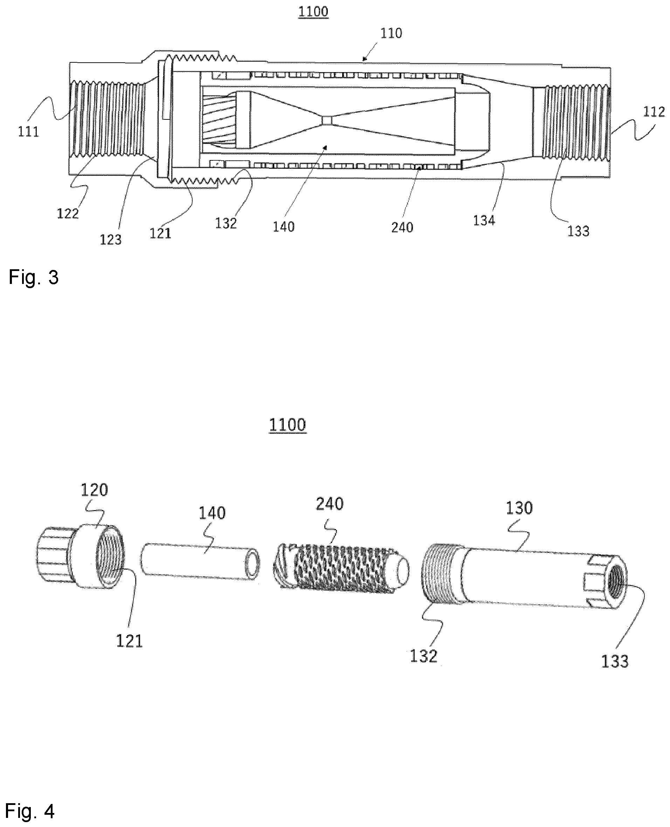

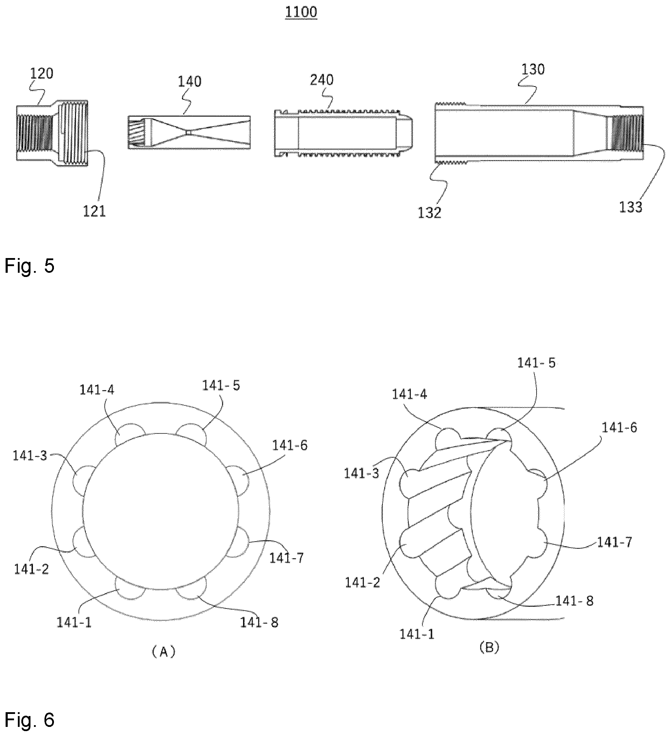

FIG. 2 is a diagram illustrating a three-dimensional perspective view of a fluid supply pipe 1100 according to an example embodiment of the fluid characteristic changing apparatus S of the present invention, and FIG. 3 is a diagram illustrating a perspective plan view when the internal parts of the fluid supply pipe 1100 are accommodated and fixed, FIG. 4 is a diagram illustrating a three-dimensional exploded perspective view of the fluid supply pipe 1100, and FIG. 5 is a diagram illustrating an exploded cross-sectional view of the fluid supply pipe 1100. As shown in these figures, the fluid supply pipe 1100 includes a pipe body 110 and a first internal structure 140 and a second internal structure 240 forming the internal structure. The second internal structure 240 has a hollow pipe structure. In FIG. 2, the fluid flows from an inlet 111 to an outlet 112 side. The inlet 111 and outlet 112 have the same diameter, and both are concentric.

The pipe body 110 functions as an housing for accommodating the second internal structure 240 in which the first internal structure 140 is disposed in the internal space. The pipe body 110 includes an inlet side member 120 and an outlet side member 130. The inlet side member 120 and the outlet side member 130 have the form of a cylindrical hollow pipe. The inlet side member 120 has an inlet 111 having a predetermined diameter at one end and a female screw 121 for connection with the outlet side member 130 which is formed by thread-cutting an inner circumferential surface at the other end. A connecting portion is formed on the side of the inlet 111, and by engaging a female screw 122 formed on an inner circumferential surface of the connecting portion with a male screw formed on an outer circumferential surface of one end of the joint of an upstream side (not shown), the inlet side member 120 and the joint of the upstream side are coupled, As shown in FIG. 3, the inner diameter of the inlet 111 is smaller than the diameter of the female screw 121, and the tapered portion 123 corresponding to the difference in diameter is formed from the end of the female screw 122 to the starting end of the female screw 121.

The outlet side member 130 has the outlet 112 having a predetermined diameter at one end and a male screw 132 for connection with the inlet side member 120 which is formed by thread-cutting an outer circumferential surface at the other end. The diameter of the outer circumferential surface of the male screw 132 of the outlet side member 130 is the same as the inner diameter of the female screw 121 of the inlet side member 120. A connecting portion is formed on the side of the outlet 112 and is coupled with the joint of the downstream side (not shown). For example, the outlet side member 130 and the joint are coupled by engaging a female screw 133 formed on an inner circumferential surface of the connecting portion with a male screw formed on an outer circumferential surface of one end of the joint. The pipe body 110 is formed by connecting the inlet side member 120 and the outlet side member 130 by screw-joining the female screw 121 of the inner circumferential surface of one end of the inlet side member 120 and the male screw 132 of the outer circumferential surface of one end of the outlet side member 130. As shown in FIG. 3 , since the inner diameter of the pipe provided with the female screw 132 is larger than the diameter of the outlet 112, a tapered portion 134 is provided on the downstream side of the outlet side member 130, and the end of the downstream side is connected to the end of the upstream side of the female screw 133.

The above described configuration of the pipe body 110 is merely an embodiment, and the present invention is not limited to the configuration. For example, connection of the inlet side member 120 and the outlet side member 130 is not limited to the screw-joining and any method for connecting mechanical components known in the art is applicable. Further, the shapes of the inlet side member 120 and the outlet side member 130 are not limited to those shown in FIG. 2, and a designer may arbitrarily choose or change according to applications of the fluid supply pipe 100. The inlet side member 120 or the outlet side member 130 is made of metal such as steel, plastic, or non-metal such as resin. This is the same in the other example embodiments described below.

Referring to FIGS. 2 to 5 together, it may be understood that the fluid supply pipe 1100 is configured by coupling the male screw 132 of the outer circumferential surface of the outlet side member 130 and the female screw 121 of the inner circumferential surface of the inlet side member 120, after inserting and fixing the first internal structure 140 into the hollow cavity of the cylindrical shaft body of the second internal structure 240 and housing in the outlet side member 130. In FIG. 3, the first internal structure 140 is completely accommodated in the second internal structure 240, but the first internal structure 140 may have a length protruding from the upstream end and/or the downstream end of the second internal structure 240. This is the same in the other example embodiments below the second embodiment. As shown in FIG. 3, the step of the downstream end of the internal cavity portion of the second internal structure 240 (located on the upstream side of the guiding portion 247 to be described later) serves as a stopper for positioning of the first internal structure 140 relative to the second internal structure 240, and the step of the upstream end of the tapered portion 134 of the outlet side member 130 serves as a stopper for positioning of the second internal structure 240 relative to the pipe body 110. In addition, by preparing a special fixing member or support member, the first internal structure 140 may be fixed or supported in the internal space of the second internal structure 240, or the second internal structure 240 may be fixed or supported in the inner space of the pipe body 110. This is the same in the other example embodiments described below.

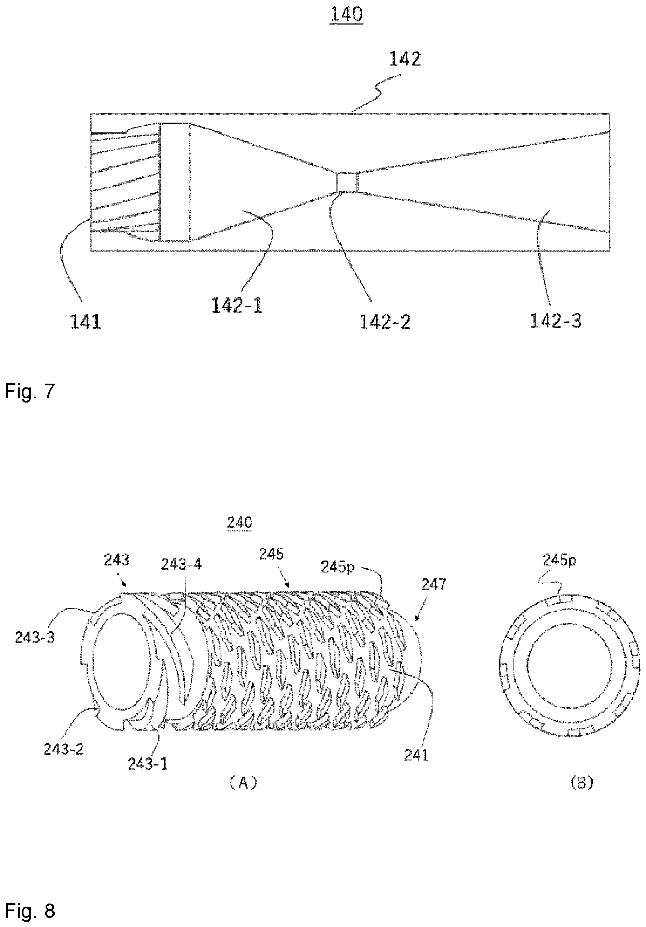

The internal structure 140 may be formed by a method of processing a cylindrical member made of metal such as steel or by a method of molding plastic (including injection molding, etc.). The outer diameter is the same as or slightly smaller than the inner diameter of the cylindrical space (cavity) of the hollow shaft body (cylindrical body) of the second internal structure 240 to be described later, and the outer shape of the first internal structure 140 is a cylindrical shape accommodated in the cylindrical space of the second internal structure 240. In the internal space of the first internal structure 140, as shown in FIG. 7, a swirl generating portion 141 on an upstream side and a flow characteristic providing portion 142 on a downstream side are provided. The swirl generating portion 141 and the flow characteristic providing portion 142 may be configured integrally as one body or configured as separate bodies, but are formed by performing, for example, cutting, turning, or grinding the inside of the cylindrical member alone or in combination thereof. Alternatively, a three-dimensional print may be formed from a metal or resin material by a 3D printer.

In the vicinity of the opening on the upstream side, the swirl generating portion 141 is provided. Specifically, in the swirl generating portion 141, a plurality of grooves having a specific angle and changing the flow of the fluid are formed in the upstream side inner wall surface of the tubular body. Specifically, as shown in Fig. 6(A), eight grooves having a substantially semicircular cross section are formed at a specific angle in the oblique direction from the cross section as shown in Fig. 6(B). In other words, the grooves 141-1141-8 are formed at intervals of 45 degrees in the cross section, and are inclined to the right as it goes downstream. The number of the grooves, the shape of the grooves, and the specific inclination angle may be appropriately selected, and are not limited to this example embodiment. With this configuration of the swirl generating portion 141, the fluid supplied to the first internal structure 140 becomes a swirling flow that turns to the right in the upstream portion. Since a swirling flow may be generated only by forming such a plurality of grooves, processing is very simple.

The flow characteristic providing portion 142 on the downstream side of the first internal structure 140 has an internal cavity having the shape of a venturi tube. In other words, a reduced diameter portion 142-1 of which the inner diameter is rapidly reduced, a narrowed diameter portion 142-2 connected thereto, and a expanded diameter portion 142-3 of which the inner diameter is rapidly expanded are formed in the same centrifugal shape. As an configuration example, the distance in the fluid flow direction of the reduced diameter portion 142-1 is shorter than the distance in the fluid flow direction of the expanded diameter portion 142-3. In addition, the maximum radius of the reduced diameter portion 142-1 and the maximum radius of the expanded diameter portion 142-3 are the same or substantially the same. Of course, the shape of the venturi tube of this internal cavity may be suitably changed. With the abrupt change in the inner diameter of this internal cavity, the velocity of the fluid (actually a swirl (spiral) flow) becomes maximum at the narrowed diameter portion 142-2, and the static pressure of a fluid drops sharply according to Bernoulli's equation. The relationship between pressure, velocity, and potential energy with no external energy to a fluid is given by the following Bernoulli equation.

[Equation 1]

$$P + \frac{\rho V^2}{2} + \rho g h = K$$

Here, p is the pressure at a point on a streamline, $\rho$ is the density of the fluid, v is the fluid flow speed at the point, g is the gravitational acceleration, h is the height of the point with respect to a reference plane, and k is a constant. The Bernoulli's law expressed as the above equation is the energy conservation law applied to fluids, of which the first term corresponds to the energy of the pressure (static pressure), the second term corresponds to the kinetic energy (dynamic pressure), and the third term corresponds to the potential energy, and explains that the sum of all the forms of energy on a streamline is constant for flowing fluids at all times. According to the Bernoulli's law, the fluid velocity is low and the static pressure is high in the upstream side of the reduced diameter portion 142-1 having the large cross-sectional area. On the other hand, the fluid velocity is increased and the static pressure is lowered in the downstream side of the reduced diameter portion 142-1 having the small cross-sectional area. Further, the fluid velocity becomes the maximum and the static pressure is the lowest at the narrowed diameter portion 142-2.

If the fluid is a liquid, since the boiling point decreases as the pressure decreases, according to Boyle-Charles'law, when the reduced static pressure reaches the saturated vapor pressure of the liquid, vaporization of the liquid begins. As described above, a phenomenon in which the static pressure P becomes lower than the saturated vapor pressure Pv in a very short time (3000-4000 Pa in the case of water) at almost the same temperature, and the liquid rapidly vaporizes is called a cavitation phenomenon. The cavity shape of the venturi tube induces this cavitation phenomenon. Due to the cavitation phenomenon, the liquid boils with the nuclei of minute bubbles of 100 microns or less present in the liquid as the nucleus, or a large number of small bubbles are generated by the isolation of the dissolved gas. Here, there is a possibility that some are ultrafine bubbles, but mainly microbubbles are generated.

With respect to the fluid characteristic changing apparatus S (refer to FIG. 1), even when gas as the second fluid is mixed with the liquid as the first fluid, in the flow characteristic providing portion 142, the static pressure of the gas is lowered at the narrowed diameter portion 142-2, and the bubbles greatly expand. However, due to the change in which the inner diameter is rapidly expanded by the expanded diameter portion 142-3, the flow rate is lowered and the pressure is increased, and the large-sized bubbles are destroyed by being pressurized, divided and refined, and mainly microbubbles are generated.

As such, a part of the fluid supplied from the inlet 111 of the pipe body 110 is supplied from an opening on the upstream side of the first internal structure 140, becomes a right-handed fluid in the swirl generating portion 141 of the upstream side, and when passing as a turning flow through the internal cavity of the venturi tube shape of the flow characteristic providing portion 142 of the downstream side, after the speed is changed and the static pressure is sharply lowered in the reduced diameter portion 142-1, the static pressure becomes the lowest in the narrowed diameter portion 142-2, and on the other hand, the static pressure increases rapidly in the expanded diameter portion 142-3, and microbubbles are generated, or the mixed gas becomes microbubbles. In addition, the fluid containing the microbubbles from the first internal structure 140 flows out from the most downstream opening end of the expanded diameter portion 142-3.

On the other hand, the second internal structure 240 of this example embodiment is a shaft body with a hollow inside as shown in FIG. 8, and includes a head portion 243, a body portion 245, and a guiding portion 247, from the upstream side to the downstream side, which are formed integrally on a shaft portion 241. These head portion 243, body portion 245 and guiding portion 247 are formed by performing, for example, cutting, turning, or grinding the cylindrical tubular member made of metal such as steel, alone or in combination thereof. Alternatively, it is formed by a method of molding plastic (including injection molding, etc.) or the like. Alternatively, a three-dimensional print may be formed from a metal or resin material by a 3D printer.

More specifically, the head portion 243 is a portion that generates a swirling flow (spiral flow) with respect to the fluid, and includes a shaft portion 241 having a constant diameter along the longitudinal direction when the second internal structure 240 is accommodated in the pipe body 110 and four spirally formed vanes 243-1 to 243-4. As shown in FIG. 8a, each of the vanes 243-1 to 243-4 has its tip spaced by 90 degrees from each other in the circumferential direction of the shaft portion 241, and is formed in a spiral shape in the counterclockwise direction at a predetermined interval on the outer circumferential surface corresponding to the head portion 243 of the shaft portion 241. Although the number of vanes was set to four in the present example embodiment, the present invention is not limited to this example embodiment, and the number of vanes may be plural, preferably three or more. In this way, the head portion 243 creates a clockwise swirling flow to the fluid. In addition, as long as the form of the vanes 243-1 to 243-4 for generating the swirling flow of the head portion 243 is a form that may cause a swirling flow while the fluid passes between each vane, the shape such as the angle, thickness, and the like of the vane is not particularly limited. In addition, in the present example embodiment, the head portion 243 has an outer diameter close to the wall surface of the internal space of the outlet side member 130 of the pipe body 110 when the second internal structure 240 is accommodated in the pipe body 110. In other words, the maximum outer diameter of the outer surface of the head portion 243 is equal to or slightly smaller than the inner diameter of the pipe body 110.

The body portion 245 is formed on the downstream side from the head portion 243 and has a cylindrical cross section, and includes a shaft portion 241 having a constant diameter and a plurality of protrusions (convex portions) 245p formed in the form of a net protruding from the outer circumferential surface of the shaft portion 241. The horizontally cut cross-section of this protrusion 245p is approximately a rhombus. In the present example embodiment, the diameter of the shaft portion 241 of the body portion 245 is the same as the diameter of the head portion 243. In addition, when the fluid flows from the head portion 243 to the body portion 245, the cross-sectional area of the flow path is rapidly reduced to change the flow characteristics of the fluid.

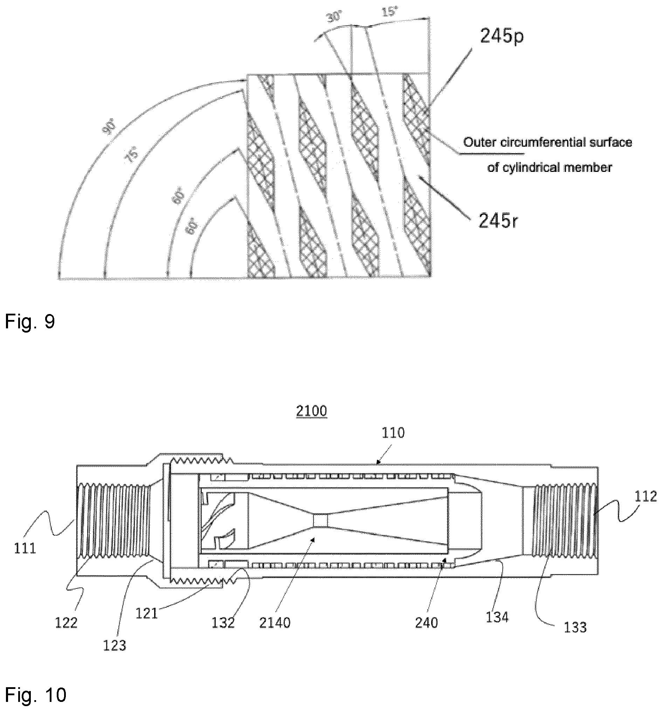

FIG. 9 illustrates an example of a method of forming the protrusion 245p and the flow path 245r according to the present example embodiment. A plurality of lines (for example, 14 annular flow paths flowing in parallel) with predetermined spacing therebetween in the direction of 90 degrees with respect to the longitudinal direction of the cylindrical member (left-right direction in the drawing) and a plurality of lines (a plurality of, for example eight, spirally flowing spiral flow paths) inclined at a predetermined angle (for example, 60 degrees) with respect to the longitudinal direction with predetermined spacing therebetween are intersected with each other, and process such as cutting is performed by skipping between lines in the direction of 90 degrees once, and at the same time, process such as cutting is performed by skipping between inclined lines once. In this way, the plurality of protrusions 245p protruding from the outer circumferential surface of the shaft portion 241 are regularly formed by skipping vertically (in the circumferential direction), and left and right (in the longitudinal direction of the shaft portion 241) one by one . As described above, a flow path 245r is formed between each of the protrusions 245p. In the present example embodiment, when the internal structure 240 is accommodated in the pipe body 110, the body portion 245 has an outer diameter close to the wall surface of the cylindrical internal space of the outlet side member 130 of the pipe body 110 (that is, the ceiling surface (upper surface) of the protrusion 245p is close enough to contact the wall surface). In addition, the shape of the plurality of protrusions 245p may take various cross-sectional shapes, for example, a triangle, a polygon, and other shapes, for example, an airfoil type (wing type) disclosed in WO2014/204399, or may be modified into a notch type disclosed in Japanese Patent Publication No. 2016-536139. The arrangement may also be appropriately changed (e.g., angle, width, etc.) from FIG. 9. For example, the size of the protrusion may be large on the upstream side and small on the downstream side. Selection and modification of these shapes and arrangements are equally applicable to other example embodiments.

In the present example embodiment, a guiding portion 246 is provided, of which, on the downstream side of the body portion 245, in the shape of a truncated dome, the side of which is shown in Fig. 8b, and in the center, a hole connected to an opening end of the downstream side of the first internal structure 140 is formed. The fluid guided toward the center by the guiding portion 247 is discharged through the outlet 112 of the pipe body 110. The shape of the guiding portion 247 is not limited to a truncated dome form, and may take a truncated conical form, a truncated pyramid form, or the like.

A portion of the fluid introduced through the inlet 111 of the pipe body 110 passes between the inner wall surface of the inner side of the inlet side member 120 and the four spirally formed vanes 243-1 to 243-4 of the head portion 243. As a result, the fluid becomes an intense swirling flow by each vane of the head portion 243 and is sent to the body portion 245. The fluid passes through the plurality of narrow flow paths 245r between the plurality of protrusions 45p with an approximately rhombic horizontal cross section of the body portion 245. Specifically, among these flow paths 245r, for example, the flow of the eight spiral flow paths is steep, and the flow of the 14 annular closed flow paths is gentle. The spiral flow path and the annular closed flow path become an intersecting flow path, and the fluid moves downstream as a whole while repeating collisions at the intersection position. As a result, in the fluid, the turbulence causes many microscopic vortexes. This phenomenon induces mixing and diffusion of the fluid. The above structure of the body portion 245 is useful even when mixing two or more fluids having different properties.

Further, the second internal structure 240 has a structure in which the fluid flows from an upstream side (head portion 243) having a large cross-sectional area to a downstream side having a small cross-sectional area (a flow path 245r formed between the plurality of protrusions 245p of the body portion 245). This structure is expressed by the above-mentioned Bernoulli equation. If the fluid is a liquid, the cavitation phenomenon is induced. Due to the cavitation phenomenon, the liquid boils with the nuclei of minute bubbles of 100 microns or less present in the liquid as the nucleus, or a large number of small bubbles are generated by the isolation of the dissolved gas. In other words, in the process of the fluid passing through the flow characteristic providing portion 245, fine bubbles including a plurality of microbubbles and ultrafine bubbles are generated.

Also, when the fluid is water, one water molecule forms hydrogen bonds with four other water molecules, but it is not easy to break the hydrogen bond network. Therefore, water has a very high boiling point and melting point compared to other liquids that do not form hydrogen bonds, and exhibits a high viscosity. The high boiling point of water has an excellent cooling effect, so it is often used as a cooling water in the processing equipment field or machine tool field, but there is a problem in that the water molecule size is large and the permeability or lubricity to the processing area is not good. Therefore, in general, a special lubricating oil (e.g., cutting oil) rather than water is used alone or mixed with water in many cases. However, when the fluid supply pipe 1100 is used, water vaporization occurs due to the above-described cavitation phenomenon, and as a result, it is considered that the hydrogen bonding network of water is destroyed. In addition, fine bubbles (especially ultrafine bubbles) generated by vaporization improve the permeability and lubricity of the fluid (water). Improved permeability results in increased cooling efficiency.

In addition, the fluid including the microbubbles that have passed through the body portion 245 is guided by the guiding portion 247 and flows toward the end of the second internal structure 240. In this way, the fluid (mainly containing ultrafine bubbles) passing through the flow path between the second internal structure 240 and the inner wall of the pipe body 110 merges with the fluid (mainly containing microbubbles) passing through the inner flow path of the first internal structure 140 at the downstream of the pipe body 110, and output from the outlet 112 of the pipe body 110 to the outside.

In addition, in the above configuration example, a swirling flow (orbital flow) in a clockwise direction is generated in the swirl generating portion 141 of the first internal structure 140 and the head portion 243 of the second internal structure 240. However, counterclockwise swirling flow (orbital flow) may occur. This is the same in the other example embodiments below.

(Example Embodiment 2)

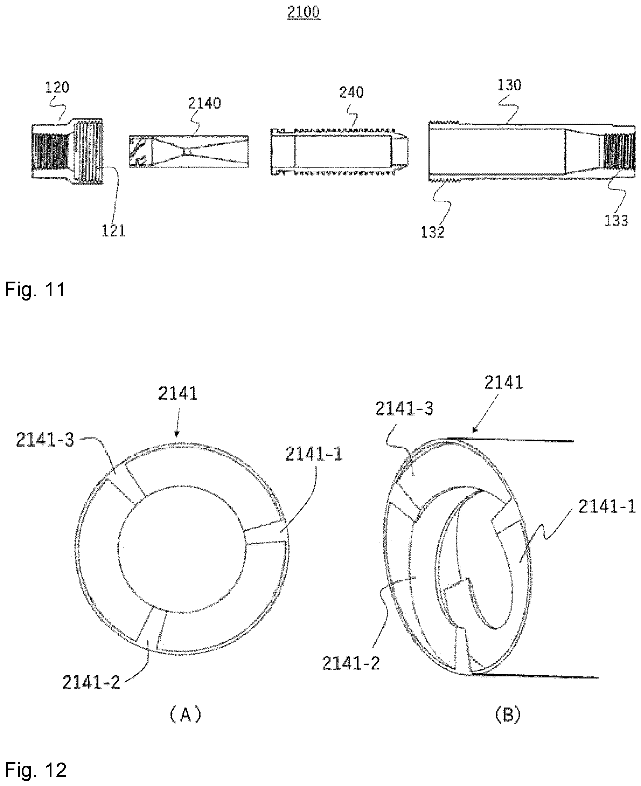

Next, a fluid supply pipe according to example embodiment 2 of the fluid characteristic changing apparatus S of the present invention will be described. FIG. 10 is a diagram illustrating a perspective plan view of the fluid supply pipe 2100, and FIG. 11 is a diagram illustrating an exploded cross-sectional view of the fluid supply pipe 2100. Example embodiment 2 differs from example embodiment 2 in the configuration of the upstream swirl generating means of the first internal structure, and the same parts as in example embodiment 1 are given the same reference numerals and descriptions thereof are omitted. As shown, only the swirl generating portion 2141 of the first internal structure 2140 is different from example embodiment 1. In other words, the swirl generating portion 2141 provided in the vicinity of the opening of the upstream side includes a plurality of vanes protruding from the inner wall surface of the cylindrical body. Although the number of vanes is three in the present example embodiment, two or four or more may be sufficient. In the present example embodiment, the vanes 2141-1 to 2141-3 have their tips spaced by 120 degrees from each other in the circumferential direction as shown in FIG. 12a, and as shown in FIG. 12b, for example, have the shape of a spiral vane or blade of a predetermined length (for example, half-turn around the side of the cylindrical pipe) in the downstream direction to generate a swirling flow of right rotation (clockwise). The number of the plurality of vanes and the angle at which the tips are spaced in the circumferential direction of the shaft portion are related. For example, in case of 4 vanes, the angle becomes 90 degrees, and in case of 5 vanes, the angle becomes 72 degrees. As long as the form of the vanes is a form that may cause a swirling flow while the fluid passes between each vane, the shape such as the angle, thickness, and the like of the vane is not particularly limited.

In example embodiment 2, a part of the fluid supplied from the inlet 111 of the pipe body 2110 is supplied from an opening on the upstream side of the first internal structure 2140, and becomes a fluid turning right in the swirl generating portion 141 of the upstream side and passes as a swirling flow through the venturi tube-shaped internal cavity of the flow characteristic providing portion 142 of the downstream side. Here, after the flow velocity is changed and the static pressure is sharply lowered in the reduced diameter portion 142-1, the static pressure becomes the lowest in the narrowed diameter portion 142-2, and on the other hand, the static pressure increases rapidly in the expanded diameter portion 142-3, and microbubbles are generated, or the mixed gas becomes microbubbles. In addition, the fluid including microbubbles from the first internal structure 2140 flows out from the most downstream opening end of the expanded diameter portion 142-3. Then, the fluid merges with the fluid (mainly containing ultrafine bubbles) passing through the flow path between the second internal structure 240 and the inner wall of the pipe body 110, and is outputted from the outlet 112 of the pipe body 110 to the outside.

In the present example embodiment, in the swirl generating portion 2141 of the first internal structure 2140 and the head portion 243 of the second internal structure 240, a clockwise swirling flow (orbital flow) occurs, but a counterclockwise swirling flow (orbital flow) may also occur. In addition, the swirl generating portion 2141 of the first internal structure 2140 may be employed in another example embodiment to be described later.

(Example Embodiment 3)

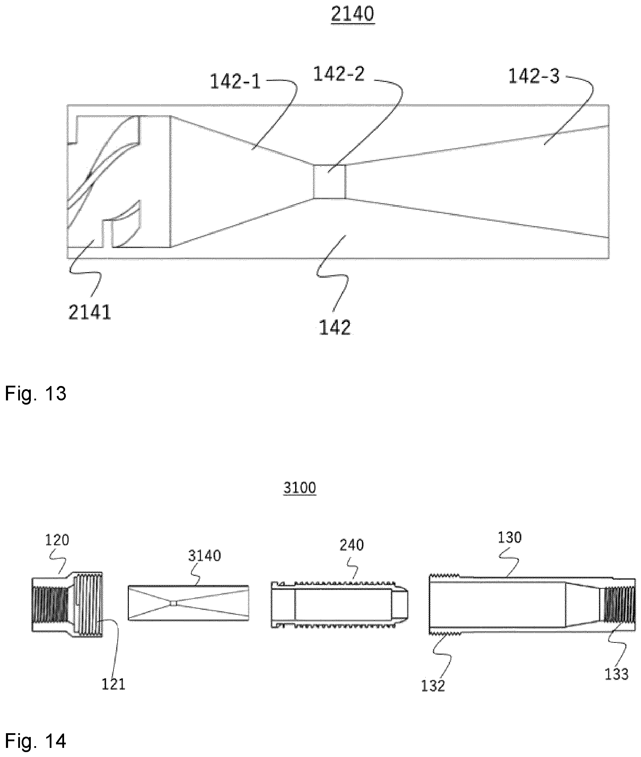

Next, a fluid supply pipe according to example embodiment 3 of the fluid characteristic changing apparatus S of the present invention will be described. FIG. 14 is a diagram illustrating an exploded cross-sectional view of the fluid supply pipe 3100. Example embodiment 3 differs from example embodiments 1 and 2 only in that there is no swirl generating means in the upstream portion. The same reference numerals are assigned to the same parts as those of example embodiments 1 and 2, and descriptions thereof are omitted.

The first internal structure 3140 includes a flow characteristic providing portion 3142 and has an internal cavity having the shape of a venturi tube. In other words, a reduced diameter portion 3142-1 of which the inner diameter is rapidly reduced, a narrowed diameter portion 3142-2 connected thereto, and a expanded diameter portion 3142-3 of which the inner diameter is rapidly expanded are formed in the same centrifugal shape. As an configuration example, the distance in the fluid flow direction of the reduced diameter portion 3142-1 is shorter than the distance in the fluid flow direction of the expanded diameter portion 3142-3. In addition, the maximum radius of the reduced diameter portion 3142-1 and the maximum radius of the expanded diameter portion 3142-3 are the same or substantially the same. The shape of the venturi tube of this internal cavity may be suitably changed. With the abrupt change in the inner diameter of this internal cavity, the velocity of the fluid which go almost straight (some may be swirled by turbulence) becomes maximum at the narrowed diameter portion 3142-2, and the static pressure of a fluid drops sharply according to Bernoulli's equation. In addition, when the static pressure in the expanded diameter portion 3142-3 is rapidly increased to the contrary, microbubbles are generated or the mixed gas becomes microbubbles. In addition, the fluid containing microbubbles from the first internal structure 3140 flows out from the most downstream open end of the expanded diameter portion 3142-3. In addition, even in the following example embodiments, the first internal structure 3140 having no swirl generating portion may be employed.

(Example Embodiment 4)

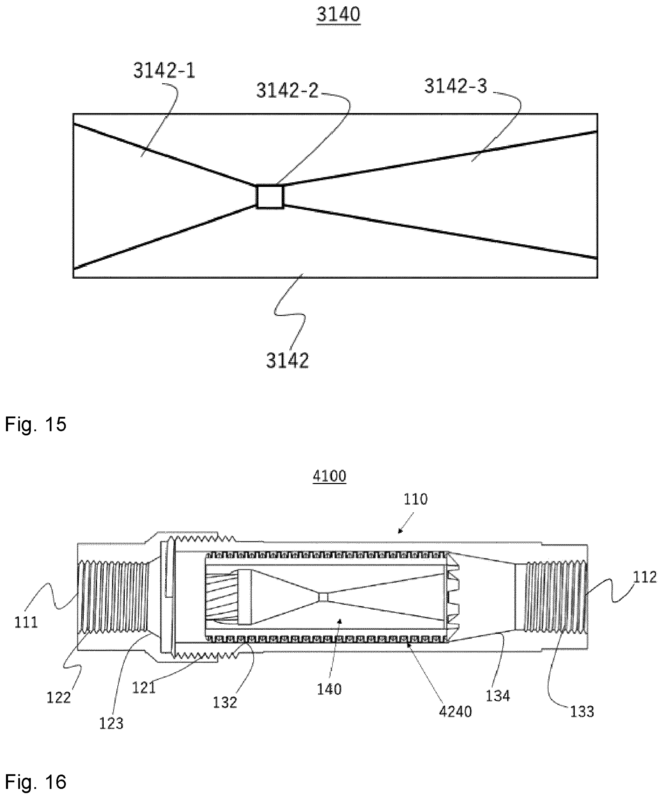

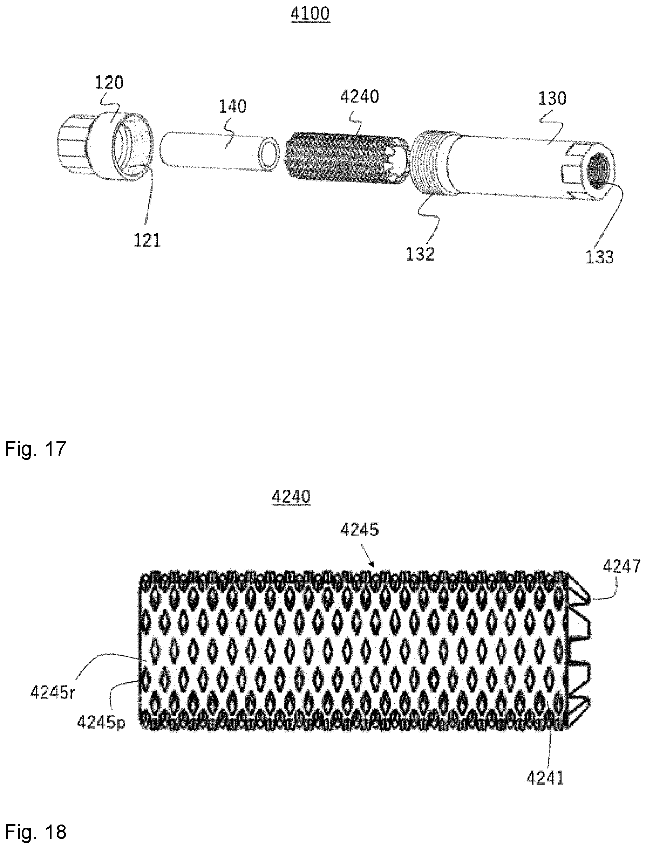

Next, a fluid supply pipe according to example embodiment 4 of the fluid characteristic changing apparatus S of the present invention will be described. FIG. 16 is a diagram illustrating a perspective plan view of the fluid supply pipe 4100, and FIG. 17 is a diagram illustrating an exploded three-dimensional external perspective view of the fluid supply pipe 4100. Example embodiment 4 is only different from example embodiment 1 in the configuration of the second internal structure, and the same parts as those of example embodiment 1 are given the same reference numerals and the description thereof is omitted. As shown in FIG. 18, in the present example embodiment, the hollow second internal structure 4240 is a hollow circular shaft body, with a body portion 4245 having a plurality of protrusions 4245p installed in a net shape on the outer surface. Unlike example embodiment 1, the head portion is not included.

The body portion 4245 includes a shaft portion 4241 having a cylindrical cross-section and having a constant diameter, and a plurality of protrusions (convex portions) 4245p formed in a net shape protruding from the outer circumferential surface of the shaft portion 421 and having an approximately rhombus shape. In example embodiment 4, the cross section of the protrusion 4245p is approximately rhombus, and the side (side edge) connecting the vertices having an obtuse angle of a rhombus is formed so as to come to the front with respect to the flow (the direction from the left to the right in FIG. 18). The two sides of the surface with the obtuse angle therebetween separate the fluid from left and right to flow. Although the fluid proceeds separately in two directions above the right diagonal line and below the right diagonal line in FIG. 18, it is repeatedly mixed by colliding with the proceeding fluid similarly separated from the other protrusions 4245p. In this way, the fluid flows through the intersecting flow path 4245r, and is directed downstream. In FIG. 18, by performing process such as cutting by skipping between a plurality of lines having inclination of the angle obtained by subtracting the obtuse angle of the rhombus (for example, 140 degrees) from 180 degrees with respect to the longitudinal direction of the cylindrical shaft member (left and right directions in the drawing) and dividing it in half (for example, 20 degrees), and with predetermined spacing therebetween in the direction of diagonally downward to the right of the drawing once, and at the same time, by performing process such as cutting by skipping between a plurality of lines inclined in the direction of diagonally upward to the right once, a plurality of protrusions 4245p protruding from the outer circumferential surface of the shaft portion 4241 are regularly formed by skipping one by one vertically (in the circumferential direction) and left and right (in the longitudinal direction of the shaft portion 4241).

In the present example embodiment, when the internal structure 4240 is accommodated in the pipe body 110, the body portion 4245 has an outer diameter close to the wall surface of the cylindrical internal space of the outlet side member 130 of the pipe body 110 (that is, the ceiling surface (upper surface) of the protrusion 4245p is close enough to contact the wall surface). In addition, the ceiling surface is part of the outer surface of the original circumference and has a rounded shape. The shape and arrangement of the plurality of protrusions 4245p may also be appropriately changed from FIG. 18.

In the present example embodiment, the guiding portion 4247 is provided on the downstream side of the body portion 4245 . The guiding portion 4247 is eight protrusions having an inclined surface toward the center of the shaft body, and guides the fluid toward the center of the shaft body. And the fluid is discharged through the outlet 112 of the pipe body 110. The number and shape of the guiding portion 4247 are not limited to those shown.

A part of the fluid introduced through the inlet 111 of the pipe body 110 passes through the plurality of narrow flow paths 4245r between the plurality of protrusions 4245p with an approximately rhombic horizontal cross section of the body portion 4245. Specifically, this flow path 4245r becomes an intersecting flow path, and the fluid moves downstream as a whole while repeating collisions at the intersection position. As a result, in the fluid, the turbulence causes many microscopic vortexes. Alternatively, a flip-flop phenomenon in which the fluid is switched alternately occurs, and this phenomenon causes mixing and diffusion of the fluid. The above structure of the body portion 4245 is also useful for mixing two or more fluids having different properties.

In addition, in the present example embodiment, in the fluid supplied from the upstream, the cross-sectional area of the flow path 4245r in the body portion 4245 is rapidly reduced to change the flow characteristics of the fluid. This is similar to example embodiments 1 to 3. In other words, in the flow path 4245r having a small cross-section of the second internal structure 4245, due to the cavitation phenomenon, the liquid boils with the nuclei of minute bubbles of 100 microns or less present in the liquid as the nucleus, or a large number of small bubbles are generated by the isolation of the dissolved gas. In other words, in the process of the fluid passing through the flow characteristic providing portion 4245, fine bubbles including a plurality of microbubbles or ultrafine bubbles are generated.

(Example Embodiment 5)

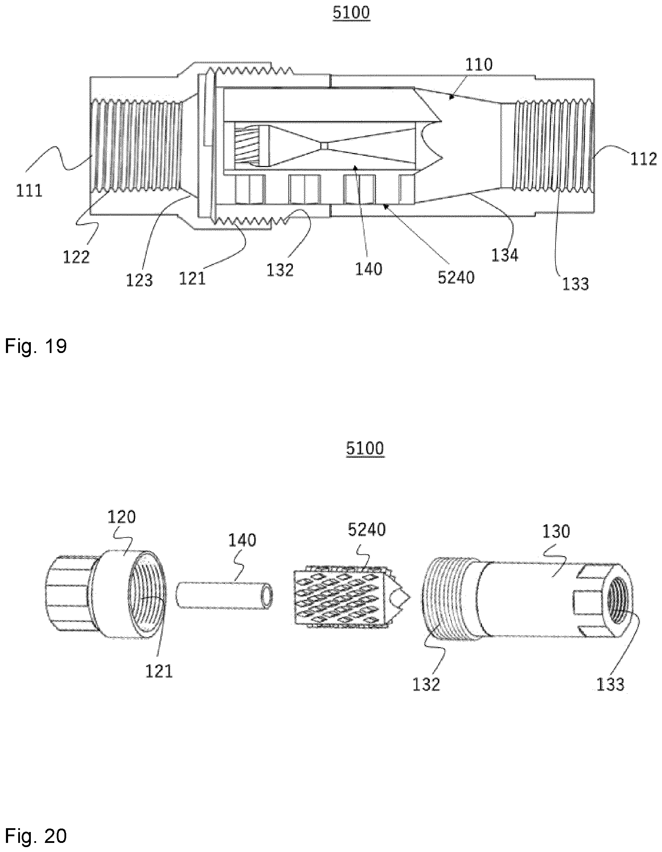

Next, a fluid supply pipe according to example embodiment 5 of the fluid characteristic changing apparatus S of the present invention will be described. FIG. 19 is a diagram illustrating a perspective plan view of the fluid supply pipe 5100, and FIG. 20 is a diagram illustrating an exploded three-dimensional external perspective view of the fluid supply pipe 5100. Example embodiment 5 is only different from the other example embodiments in the configuration of the second internal structure, and parts identical to those of the other example embodiments are given the same reference numerals and descriptions thereof are omitted. As shown in FIG. 20, in the present example embodiment, the hollow second internal structure 5240 is a prismatic shaft, and has a body portion 5245 in which a plurality of protrusions 5245p are formed in a 丁匚人 shape on the outer surface. Unlike example embodiment 1, a head portion is not provided. In addition, the outer shape of the shaft body of the second internal structure 5245 is a triangular prism, and has three side surfaces. In addition, the outer shape of the shaft body may be a square pillar or other prismatic shape. This is the same when applied to other example embodiments.

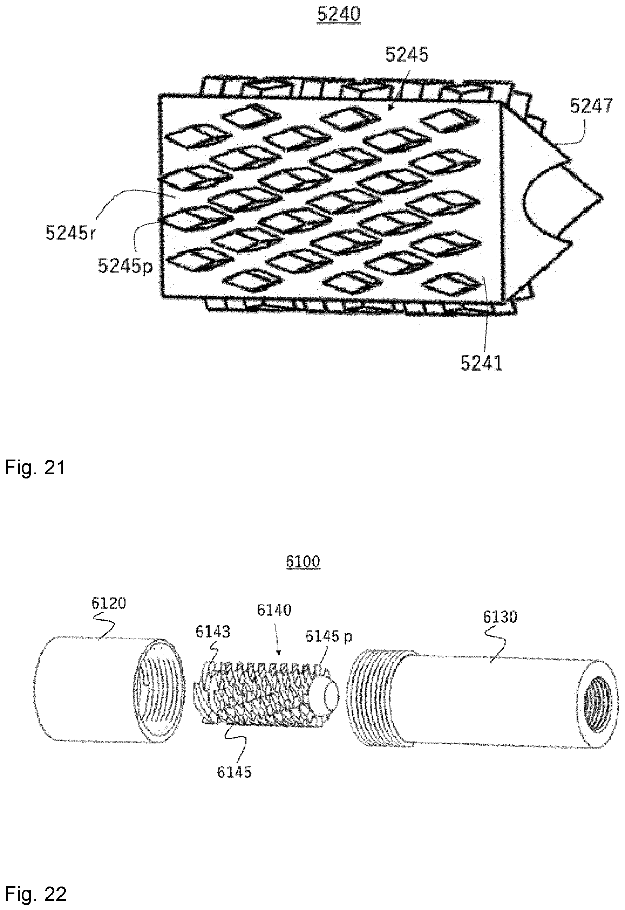

In FIG. 21, the body portion 5245 has a cylindrical cross section and has a triangular prism-shaped shaft portion 5241, and a plurality of protrusions (convex portions) 5245p formed in a net shape protruding from the outer circumferential surface of the shaft portion 5241. Each cross section of the plurality of protrusions 5245p has an approximately rhombic shape. As shown in FIG. 21, the cross section of the protrusion 5245p is approximately rhombus, and the side (side edge) connecting the vertices having an acute angle of the rhombus is formed so as to come to the front with respect to the flow (from the left to the right in the drawing). The fluid is divided into left and right to flow by the two sides of the surface with the acute angle interposed therebetween. Although the fluid proceeds in the direction above the right diagonal line and below the right diagonal line, it is repeatedly mixed by colliding with the proceeding fluid similarly separated from the other protrusions 5245p. In this way, the fluid flows through the intersecting flow path 5245r, and is directed downstream. In FIG. 21, by performing process such as cutting by skipping between a plurality of lines having inclination of the angle obtained by subtracting the acute angle of the rhombus (for example, 40 degrees) from 180 degrees with respect to the longitudinal direction of the delta shaft member (left and right directions in the drawing) and dividing it in half (for example, 70 degrees), and with predetermined spacing therebetween in the direction of diagonally downward to the right of the drawing once, and at the same time, by performing process such as cutting by skipping between a plurality of lines inclined in the direction of diagonally upward to the right once, a plurality of protrusions 5245p protruding from the outer circumferential surface of the shaft portion 5241 are regularly formed by skipping one by one vertically (in the circumferential direction) and left and right (in the longitudinal direction of the shaft portion 5241). By performing such a processing process on three sides, the whole body portion is formed. In addition, since the original shaft body before processing is cylindrical, each of the ceiling surface (upper surface) of the plurality of protrusions 5245p is the outer circumferential surface of the original circumference and has a round shape, and the overall height is high in the center and low outward.

In the present example embodiment, when the internal structure 5240 is accommodated in the pipe body 110, the body portion 245 has an outer diameter close to the wall surface of the cylindrical internal space of the outlet side member 130 of the pipe body 110 (that is, the ceiling surface (upper surface) of the protrusion 5245p is close enough to contact the wall surface). The plurality of protrusions 5245p may take various shapes, and the arrangement thereof may also be appropriately changed (angle, width, etc.) from FIG. 21. In particular, when the protrusions 5245p are arranged at a slight angle for each row, turbulence is further generated.

In the present example embodiment, a guiding portion 5247 is provided on the downstream side of the body portion 5245. The guiding portion 5247 is a triangular pyramid with an inclined surface toward the center of the shaft body, and the end portion is cut to lead to the internal cavity. The guiding portion 5247 guides the fluid toward the center of the shaft body. And the fluid is discharged through the outlet 112 of the pipe body 110. The shape of the guide portion 5247 can also be appropriately changed according to the shape of the prism, and is not limited to the one shown.

A part of the fluid introduced through the inlet 111 of the pipe body 110 passes through the plurality of narrow flow paths 5245r between the plurality of protrusions 5245p with an approximately rhombic horizontal cross section of the body portion 5245. Specifically, this flow path 5245r becomes an intersecting flow path, and the fluid moves downstream as a whole while repeating collisions at the intersection position. As a result, in the fluid, the turbulence causes many microscopic vortexes. Alternatively, a flip-flop phenomenon in which the fluid is switched alternately also occurs, which induces mixing and diffusion of the fluid. The above structure of the body portion 5245 is useful even when two or more fluids having different properties are mixed.

In addition, in the present example embodiment, the cross-sectional area of the flow path 5245r in the body portion 5245 of the fluid supplied from the upstream is rapidly reduced to change the flow characteristics of the fluid. This is similar to example embodiments 1 to 4. In other words, in the flow path 5245r having a small cross-section of the second internal structure 5245, due to the cavitation phenomenon, the liquid boils with the nuclei of minute bubbles of 100 microns or less present in the liquid as the nucleus, or a large number of small bubbles are generated by the isolation of the dissolved gas. In other words, in the process of the fluid passing through the flow characteristic providing portion 5245, fine bubbles including a plurality of microbubbles or ultrafine bubbles are generated.

(Example Embodiment 6)

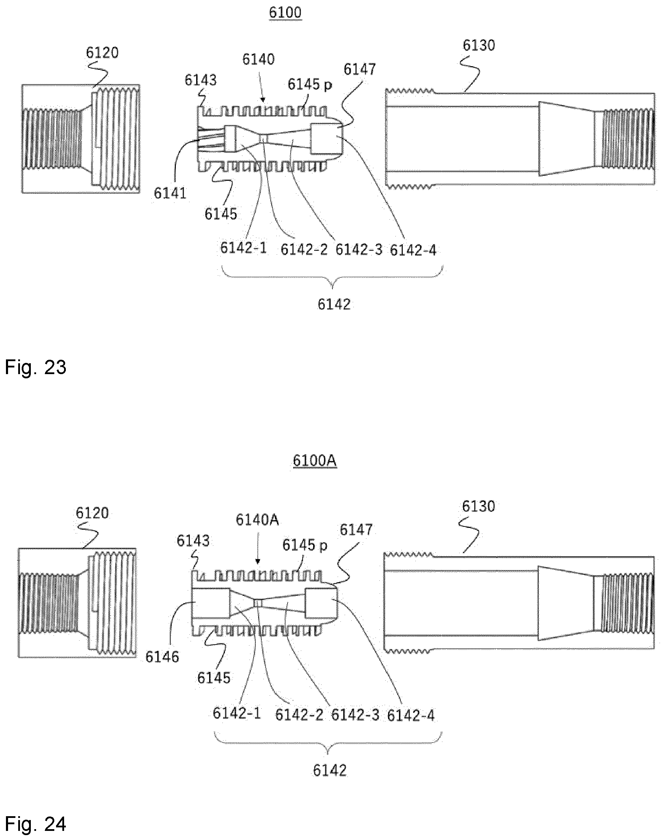

Next, the fluid supply pipe 6100 according to example embodiment 6 of the fluid characteristic changing apparatus S of the present invention will be described. FIG. 22 is a diagram illustrating an exploded three-dimensional external perspective view of the fluid supply pipe 6100. The pipe body of example embodiment 6 has a difference in shape from example embodiment 1 in that the inlet end of the outer surface of the inlet side member 6120 is a cylindrical shape of the same diameter, and that the outlet end of the outer surface of the outlet side member 6130 has a cylindrical shape of the same diameter, but is functionally the same. In addition, the internal structure 6140 included in the interior of the pipe body is different in that the first internal structure 140 and the hollow second internal structure 240 of example embodiment 1 are integrally formed as one body. In other words, the internal structure 6140 of example embodiment 6, as shown in FIG. 23, has a tubular body shape and has an inner structure and an outer structure. The inner structure which is a structure of the internal side of the tubular body, includes, from the upstream, a swirl generating portion 614, a flow characteristic providing portion with hollow venturi tube structure 6142 (a reduced diameter portion 6142-1, a narrowed diameter portion 6142-2, a expanded diameter portion 6142-3, and a straight pipe portion 6142-4), and has a configuration similar to that of example embodiment 1. As for the outer structure which is a structure of the external side of the tubular body, a head portion 6143, a body portion 6145, and a guiding portion 6147 are formed from upstream. The head portion 6143 has, for example, four spirally formed vanes, the body portion includes a plurality of protrusions 6145p formed in a net shape, and the guiding portion has a truncated dome shape, similar to example embodiment 1.

In other words, in the internal structure 6140 of example embodiment 6, the first internal structure 140 and the hollow second internal structure 240 of example embodiment 1 are integrally formed. Accordingly, when the internal structure 6140 is disposed and fixed inside the inlet side member 6120 and the outlet side member 6130 and the fluid supply pipe 6100 is manufactured, the first internal structure 140 and the second internal structure 240 will have a similar function or action. The internal structure 6140 may be formed of a resin such as plastic or a metal such as steel by a 3D printer. Of course, other manufacturing processes such as molding may be employed. In addition, the flow characteristic providing portion 6142 having a hollow venturi tube structure, which is an inner structure of the internal structure 6140, is suitable for generating microbubbles. The body portion 6145 in which a plurality of protrusions 6145p are formed, which is an outer structure of the internal structure 6140, is suitable for generating ultrafine bubbles. In addition, since the inner structure allows the fluid to flow smoothly compared to the outer structure, it is possible to generate a large amount of fine bubbles without increasing the flow rate.

In addition, although the swirl generating portion 6141 of the internal structure 6140 is consisted of a plurality of grooves similarly to example embodiment 1, the swirl generating portion may also consist of a plurality of vanes protruding from the inner wall surface of the cylindrical body, similarly to example embodiment 2. In addition, the configuration may be the same as that of the modified example shown in FIG. 24. In other words, in the fluid supply pipe 6100A of FIG. 24, in the internal structure 6140A, a straight pipe portion 6146 is formed instead of the swirl generating portion 6141, and the other parts are similar to those of FIG. 23 of example embodiment 6, and the same reference numerals are assigned to the same parts, and descriptions thereof are omitted.

In other words, in this modified example, since there is no swirl generating portion, generation of swirling flow cannot be expected, but it becomes easier to manufacture this internal structure. In other words, the inner structure of the internal structure 6140A may be formed by a cutting process or a turning process (boring, etc.) from the upstream side and downstream side, and the manufacturing process by a 3D printer becomes unnecessary. Of course, it may be formed by a manufacturing process by a 3D printer. In addition, an outer structure of the internal structure 6140, 6140A may be made into a shape similar to the body portion 4245, 5245 of example embodiments 4 and 5, or other shape. In other words, the shape of the plurality of protrusions 6145p may take various shapes, for example, a triangle, a polygon, and other shapes, for example, an airfoil type (wing type) disclosed in WO2014/204399, or, may be modified into a notch type disclosed in Japanese Patent Publication No. 2016-536139.

(Example Embodiment 7)

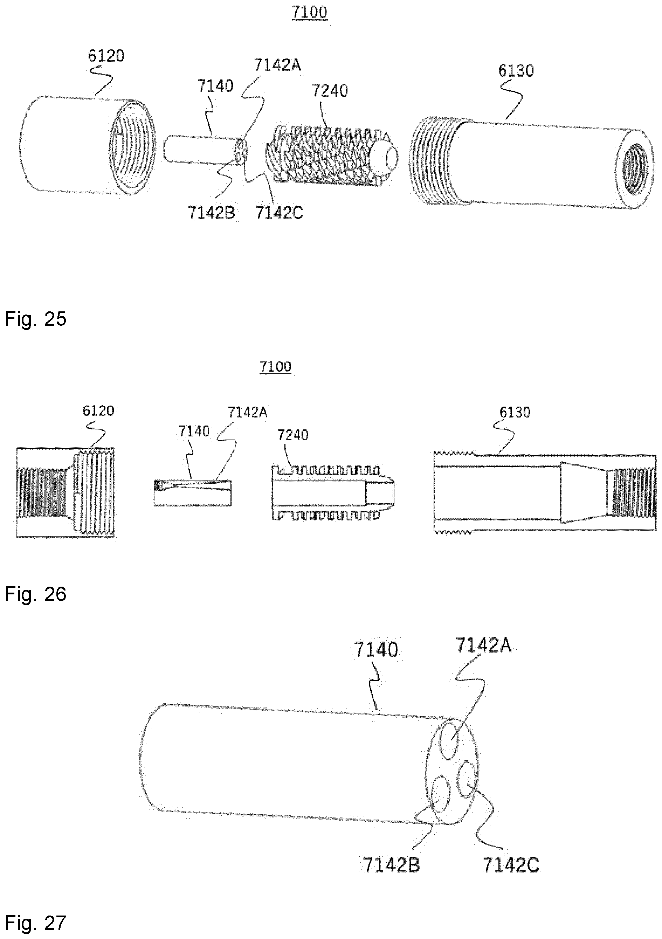

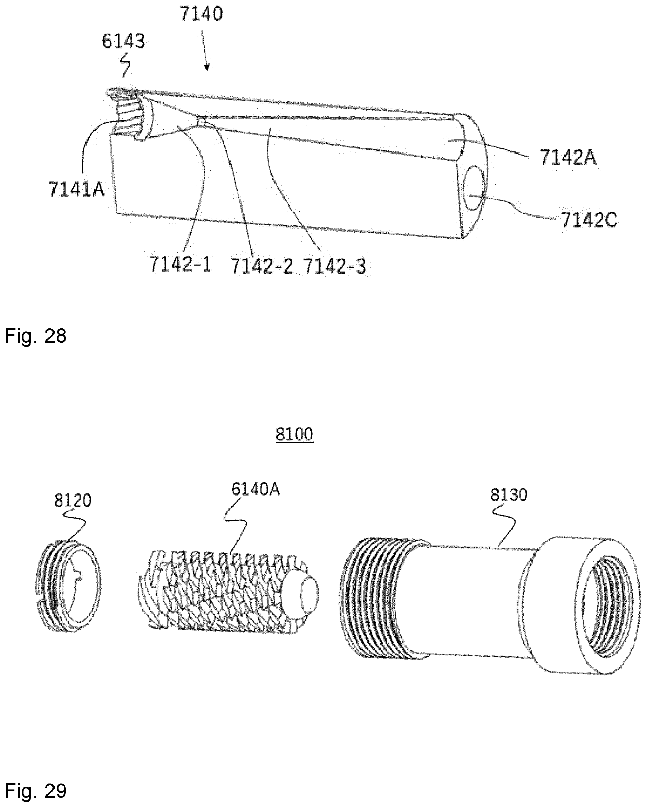

Next, the fluid supply pipe 7100 according to the example embodiment 7 of the fluid characteristic changing apparatus S of the present invention will be described. FIG. 25 is a diagram illustrating an exploded three-dimensional external perspective view of the fluid supply pipe 7100. FIG. 26 is a diagram illustrating an exploded cross-sectional view of the fluid supply pipe 7100. The example embodiment 7 has an inlet side member 6120 and an outlet side member 6130 similar to the example embodiment 6. In addition, the first internal structure 7140 included therein is inserted and fixed in the hollow cavity of the cylindrical shaft body of the second internal structure 7240. As can be seen from FIGS. 27 and 28, the first internal structure 7140 is formed with three types of swirl generating portions 7141A~7141C and flow characteristics providing portions 7142A to 7142C formed of an internal cavity having the shape of a venturi tube located downstream thereof. In other words, in each of the flow characteristic providing portions 7142A-7142C, a reduced diameter portion 7142-1 of which the inner diameter is rapidly reduced, a narrowed diameter portion 7142-2 connected thereto, and a expanded diameter portion 7142-3 of which the inner diameter is rapidly expanded are formed in the same centrifugal shape. As an configuration example, the distance in the fluid flow direction of the reduced diameter portion 7142-1 is shorter than the distance in the fluid flow direction of the expanded diameter portion 7142-3. In addition, the maximum radius of the reduced diameter portion 7142-1 and the maximum radius of the expanded diameter portion 7142-3 are the same or substantially the same. Of course, the shape of the venturi tube of this internal cavity may be suitably changed. In addition, the shape of the flow generation portion 7141A~7141C may also be suitably changed to one by a groove or one by a vane, or in order to simplify a manufacturing process, the swirl generating portion 7141A~7141C may not be provided. In addition, since the second internal structure 7240 to which the first internal structure 7140 is inserted and fixed is similar to the second internal structure of the example embodiment 1 or the second internal structure of other example embodiments, a description thereof will be omitted.

As such, in the present example embodiment, in particular, in order to increase the flow rate of the fluid, the size of the fluid supply pipe 7100 is increased, and when the diameter of the pipe is increased, it is possible to maximize the amount of microbubbles generated by installing a plurality of systems of venturi tubes. In addition, although three systems of flow characteristic providing portions 7142A~7142C are formed in the figure, the number of systems may be made into 2 or more. Therefore, 2 systems, 3 systems, and 4 systems or more may be sufficient. In addition, the flow characteristic providing portion by the plurality of systems of venturi tubes may be applied to the first internal structure of another example embodiment.

In example embodiment 7, as in example embodiment 6, the first internal structure 7140 and the second internal structure 7240 are integrally formed, and the internal structure has the shape of a tubular body. The inner side of the tubular body has an internal structure and the outer side has an outer structure, and the inner structure has a flow characteristic providing portion having a hollow venturi tube structure of three or two, or four or more systems, and the outer structure may have a body portion in which a plurality of protrusions are formed. The inner structure may be provided with a plurality of grooves in which the fluid flowing into the hollow venturi tube becomes a swirling flow, or a plurality of vanees protruding from the inner wall surface of the tubular body.

(Example Embodiment 8)

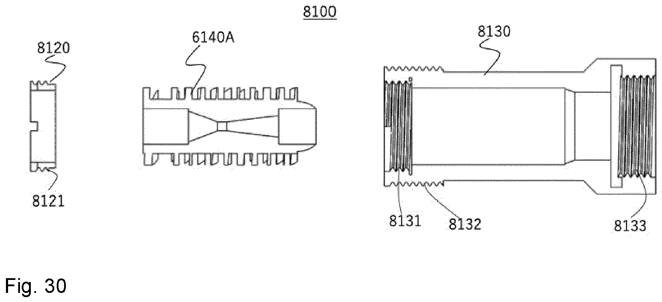

FIGS. 29 and 30 is a diagram illustrating a fluid supply pipe 8100 according to example embodiment 8 of the fluid characteristic changing apparatus S of the present invention. This is similar to the modified example (FIG. 24) of example embodiment 6, and since the internal structure 6140A is the same as that of example embodiment 6, a description thereof will be omitted. This internal structure 6140A is accommodated and fixed to the pipe body 8130 . A female screw 8131 is formed on the upstream end of the inner surface, and a male screw 8132 is formed on the outer surface of the upstream end. In addition, a female screw 8133 is also formed on the inner surface of the downstream end. The female screw 8131 inside the upstream end of the pipe body 8130, is coupled by engaging with a male screw 8121 outside the fixing ring 8120 having the function of a stopper in which the fluid inlet is formed, in the state where the internal structure 6140A is accommodated and fixed. In this way, the internal structure 6140A is fixed to the inner wall of the pipe body 8130. And the male screw 8132 of the outer surface of the upstream end of the pipe body 8130 is coupled by engaging with an upstream pipe member (not shown), and the female screw 8133 of the inner wall surface of the downstream end is coupled by engaging with a downstream pipe member (not shown). The fluid supply pipe 8100 according to the present example embodiment has a compact shape, and by making the entire with resin material, it may be manufactured at a light weight and inexpensively, and may be easily connected to and used with household water facilities, washing machines, or other devices.

The example embodiments described herein are to be considered in a descriptive sense only, and not for purposes of limitation. While this disclosure includes example embodiments, it will be apparent to one of ordinary skill in the art that various changes in form and details may be made in these example embodiments without departing from the spirit and scope of the claims and their equivalents. The plurality of specific terms are used herein are intended merely to present specific examples in order to aid in understanding of the present disclosure, but are not intended to limit the scope of the present disclosure. Various modifications may be made within the scope of the claims and their equivalents are to be construed as being included in the disclosure.

[Explanation of Reference Numerals]

S: Fluid characteristic changing apparatus
4: Target device
1100, 2100, 3100, 4100, 5100, 6100, 6100A, 7100, 8100: Fluid supply pipe
140, 2140, 3140, 7140: First internal structure
141, 2141, 6141, 7141A: Swirl generating portion
141-1141-8: Grooves
2141-12141-3: Vanes
142, 3142, 6142, 7142A7142C: Flow characteristic providing portion
240, 4240, 5240, 7240: Second internal structure
243: Head portion
234-1234-4: Vanes
245, 4245, 5245, 6145: Body portion
245p, 4245p, 5245p, 6145p: Protrusion
245r, 4245r, 5245r: Flow path
6140, 6140A: Internal structure

**Claims**

1. An internal structure which is accommodated in a housing and configured to change characteristics of a fluid with respect to the fluid, the internal structure comprising:

    a first internal structure; and
    a second internal structure,

wherein the first internal structure has a flow characteristic providing portion having a structure of at least one hollow venturi tube, and the second internal structure is in the form of a hollow shaft, accommodates at least a portion of the first internal structure inside the hollow shaft, and has a body portion having a plurality of protrusions formed on an outer surface thereof.

2. The internal structure according to claim 1, wherein upstream of the flow characteristic providing portion of the first internal structure is provided with a swirl generating means configured to turn a fluid flowing into the hollow venturi tube into a swirling flow.

3. The internal structure according to claim 2, wherein the swirl generating means is a plurality of grooves formed on an inner wall surface of a tubular body and configured to change a direction of flow of the fluid to a specific angle.

4. The internal structure according to claim 2, wherein the swirl generating means is a plurality of vanes protruding from an inner wall surface of a tubular body and configured to rotate a direction of flow of the fluid.

5. The internal structure according to claim 4, wherein each of the plurality of vanes of the swirl generating means of the first internal structure has its tip spaced by an angle depending on the number of vanes from each other in a circumferential direction of a shaft portion.

6. The internal structure according to claim 4, wherein the swirl generating means of the first internal structure comprises three vanes, and each of the vanes has its tip portion spaced by 120 degrees from each other in a circumferential direction of a shaft portion.

7. The internal structure according to claim 2, wherein the swirl generating means on an upstream side and the flow characteristic providing portion on a downstream side of the first internal structure are formed integrally.

8. The internal structure according to claim 1, wherein the flow characteristic providing portion of the first internal structure, by the structure of the hollow venturi tube, is configured to cause a cavitation phenomenon to generate microbubbles by rapidly reducing a static pressure of the fluid flowing through a flow path and then pressurizing.

9. The internal structure according to claim 1, wherein a head portion comprising a plurality of spirally formed vanes is formed upstream of the body portion of the second internal structure.

10. The internal structure according to claim 9, wherein the head portion of the second internal structure comprises a shaft portion having a circular cross-section and the plurality of spirally formed vanes, and each of the vanes has its tip spaced by an angle depending on the number of vanes from each other in a circumferential direction of the shaft portion.

11. The internal structure according to claim 10, wherein the head portion of the second internal structure comprises four spirally formed vanes, and each of the vanes has its tip spaced by 90 degrees from each other in the circumferential direction of the shaft portion.

12. The internal structure according to claim 1, wherein the body portion of the second internal structure with the plurality of protrusions formed in a net shape on its outer surface is configured to cause a cavitation phenomenon to generate microbubbles by passing a fluid through a flow path formed between the protrusions.

13. The internal structure according to claim 1, wherein the plurality of protrusions are formed in a net shape, and a flow path formed between the protrusions is an intersecting flow path in which a plurality of spiral flow paths and a plurality of annular flow paths intersect.

14. The internal structure according to claim 9, wherein the second internal structure further comprises a guiding portion configured to guide the fluid toward the center of the housing at a downstream side of the body portion.

15. The internal structure according to claim 1, wherein the plurality of protrusions are formed in a net shape, and a flow path formed between the protrusions is an intersecting flow path in which a plurality of flow paths intersect.

16. The internal structure according to claim 1, wherein the second internal structure is in the form of a cylindrical hollow shaft.

17. The internal structure according to claim 1, wherein the second internal structure is in the form of a prism shaped hollow shaft.

18. An internal structure which is accommodated in a housing and configured to change characteristics of a fluid with respect to the fluid,

   wherein the internal structure has a shape of a tubular body, and has an inner structure and an outer structure,
   the inner structure has a flow characteristic providing portion having a structure of at least one hollow venturi tube, and
   the outer structure has a body portion on which a plurality of protrusions are formed.

19. The internal structure according to claim 18, wherein the inner structure is provided with a swirl generating means configured to turn a fluid flowing into the hollow venturi tube into a swirling flow.

20. The internal structure according to claim 19, wherein the swirl generating means is a plurality of grooves formed on an inner wall surface of a tubular body and configured to change a direction of flow of the fluid to a specific angle.

21. The internal structure according to claim 19, wherein the swirl generating means is a plurality of vanes protruding from an inner wall surface of a tubular body and configured to rotate a direction of flow of the fluid.

22. A fluid characteristic changing apparatus comprising the internal structure according to any one of claims 1 to 21 and a housing for accommodating the internal structure.

23. A utilization apparatus using the fluid characteristic changing apparatus according to claim 22, wherein the fluid from the fluid characteristic changing apparatus is used as any one of a coolant, a cleaning agent, a sterilizing agent, and a heat transfer agent.

Fig. 1

1100

110

111

112

Fig. 2

1100

110

112

111

122

123 121 132 140 240 134 133

Fig. 3

1100

120

140

240

130

121

132

133

Fig. 4

**1100**

Fig. 5

(A)  (B)

Fig. 6

140

141    142-1    142-2    142-3

Fig. 7

240

243    243-4    245    245p    247    245p
243-3
243-2    243-1    241
(A)    (B)

Fig. 8

245p

Outer circumferential surface
of cylindrical member

245r

Fig. 9

2100

110

111

112

122

121

123

132

2140

240

134

133

Fig. 10

2100

120    2140    240    130

121    132    133

Fig. 11

2141

2141-3    2141-1

2141-2

(A)

2141

2141-3    2141

2141-1

2141-2

(B)

Fig. 12

2140

142-1   142-2              142-3

2141

142

Fig. 13

3100

120        3140        240              130

121                                132              133

Fig. 14

3140

3142-1

3142-2    3142-3

3142

Fig. 15

4100

110

111

122

123    121    132    140    4240    134    133

Fig. 16

4100

Fig. 17

4240

Fig. 18

5100

110

111

112

122

123    121        132        140        5240        134

133

Fig. 19

5100

120

140        5240        130

121

132        133

Fig. 20

5240

5245

5247

5245r

5245p

5241

Fig. 21

6100

6120

6143

6140

6145 p

6130

6145

Fig. 22

6100

6120
6143    6140    6145 p    6147
6141    6145
6142-1  6142-2  6142-3  6142-4
6130
6142

Fig. 23

6100A

6120
6143    6140A    6145 p    6147
6146    6145
6142-1  6142-2  6142-3  6142-4
6130
6142

Fig. 24

7100

6120

7140 7142A

7240

6130

7142B 7142C

Fig. 25

7100

6120

7140 7142A

7240

6130

Fig. 26

7140 7142A

7142B 7142C

Fig. 27

6143    7140

7141A

7142-1    7142-2    7142-3

7142A

7142C

Fig. 28

8100

8120    6140A    8130

Fig. 29

8100

8130

8120

6140A

8121

8131  8132

8133

Fig. 30

Europäisches
Patentamt

European
Patent Office

Office européen
des brevets

# EUROPEAN SEARCH REPORT

**Application Number**

EP 22 18 1925

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AT 11 728 U1 (KURKAYEV ABDULA [HU]) 15 April 2011 (2011-04-15) | 1,8,12, 18,22,23 | INV. B01F25/434 |
| Y | * abstract * * figure 1 * * paragraphs [0014], [0015] * | 2-7, 9-11, 13-17, 19-21 | B01F25/433 B01F35/00 |
| X | US 3 736 797 A (BROWN W) 5 June 1973 (1973-06-05) | 1,8,12, 16,18 | |
| A | * abstract * * figure 1 * | 2-7, 9-11, 13-15, 17,19-23 | |
| X | EP 2 277 617 A1 (HAYWARD IND INC [US]) 26 January 2011 (2011-01-26) | 1,8,12, 16,18 | |
| A | * figures 1-8B * * abstract * | 2-7, 9-11, 13-15, 17,19-23 | |
| Y | US 2020/261869 A1 (KOMAZAWA MASUHIKO [JP] ET AL) 20 August 2020 (2020-08-20) * abstract * * figures 1-43B * | 2-7,13, 15-17, 19-21 | TECHNICAL FIELDS SEARCHED (IPC) B01F B23Q B24B B05B F15D |
| Y | EP 3 357 641 A2 (SIO CO LTD [JP]) 8 August 2018 (2018-08-08) * abstract * * figures 1-26 * | 2-7, 9-11, 13-16, 19-21 | |

The present search report has been drawn up for all claims

| Place of search | Date of completion of the search | Examiner |
|---|---|---|
| The Hague | 15 November 2022 | Krasenbrink, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 18 1925

This annex lists the patent family members relating to the patent documents cited in the above-mentioned European search report.
The members are as contained in the European Patent Office EDP file on
The European Patent Office is in no way liable for these particulars which are merely given for the purpose of information.

15-11-2022

| Patent document cited in search report | | Publication date | Patent family member(s) | | Publication date |
|---|---|---|---|---|---|
| AT 11728 | U1 | 15-04-2011 | AT | 11728 U1 | 15-04-2011 |
| | | | IT | BO20110030 U1 | 17-10-2011 |
| | | | RU | 105596 U1 | 20-06-2011 |
| US 3736797 | A | 05-06-1973 | NONE | | |
| EP 2277617 | A1 | 26-01-2011 | NONE | | |
| US 2020261869 | A1 | 20-08-2020 | CN | 111558807 A | 21-08-2020 |
| | | | DE | 102020103148 A1 | 20-08-2020 |
| | | | KR | 20200099463 A | 24-08-2020 |
| | | | US | 2020261869 A1 | 20-08-2020 |
| EP 3357641 | A2 | 08-08-2018 | CN | 108284350 A | 17-07-2018 |
| | | | EP | 3357641 A2 | 08-08-2018 |
| | | | JP | 6245401 B1 | 20-12-2017 |
| | | | JP | 6598123 B2 | 30-10-2019 |
| | | | JP | 2018111192 A | 19-07-2018 |
| | | | JP | 2018111197 A | 19-07-2018 |
| | | | KR | 101838429 B1 | 13-03-2018 |
| | | | TW | 201825235 A | 16-07-2018 |
| | | | TW | 201831275 A | 01-09-2018 |
| | | | US | 2018193810 A1 | 12-07-2018 |
| | | | US | 2019143283 A1 | 16-05-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021109913 A
- JP 2021175085 A
- JP 6245397 B
- JP 6245401 B
- WO 2014204399 A
- JP 2016536139 A
- JP 2013022575 A